# EUROPÄISCHE PATENTSCHRIFT

(11) **EP 4 335 560 B1**
(45) Veröffentlichungstag und Bekanntmachung des Hinweises auf die Patenterteilung: **19.11.2025**
(21) Anmeldenummer: 22194880.5
(22) Anmeldetag: 09.09.2022
(51) Int. Cl.: B08B 5/04, B23Q 11/00, B08B 5/02

(54) **VORRICHTUNG UND VERFAHREN ZUM REINIGEN EINES WERKSTÜCKES**
DEVICE AND METHOD FOR CLEANING A WORKPIECE
DISPOSITIF ET PROCÉDÉ DE NETTOYAGE D'UNE PIÈCE

(43) Veröffentlichungstag der Anmeldung: 13.03.2024
(73) Patentinhaber: Neuhäuser GmbH, 44532 Lünen (DE)
(72) Erfinder: Henning, Michael, 44532 Lünen (DE); Neuhäuser, Jürgen, 44532 Lünen (DE)
(74) Vertreter: Andrejewski - Honke Patent- und Rechtsanwälte Partnerschaft mbB

(56) Entgegenhaltungen:
- CN-A- 111 921 982
- DE-B3- 102020 103 090
- DE-U1- 202013 012 237
- KR-A- 20190 125 809
- US-A1- 2014 020 714

## Beschreibung

Die Erfindung betrifft eine Vorrichtung und ein Verfahren zum Reinigen eines Werkstückes, mit wenigstens einer Reinigungskammer zur Aufnahme des auf einem Werkstückhalter angeordneten Werkstückes, ferner mit wenigstens einer Unterdruckeinrichtung zur Erzeugung eines durch Öffnungen der Reinigungskammer hindurch geführten Reinigungsluftstromes, und mit einer die Reinigungskammer und den Werkstückhalter und/oder das Werkstück beaufschlagenden Bewegungseinheit zur Erzeugung einer Relativbewegung des Werkstückes gegenüber den Öffnungen.

Die Reinigung von Werkstücken ist typischerweise vor dem Ein- oder Zusammenbau der betreffenden Teile erforderlich, weil insbesondere metallische Werkstücke oftmals spanend bearbeitet werden und als Folge hiervon Späne oder Stäube in Verbindung mit einer Spül- oder Bohrflüssigkeit an den fraglichen Werkstücken anhaften. Derartige Späne oder Stäube in Verbindung mit etwaiger Spülflüssigkeit oder Öl müssen vor dem anschließenden Zusammenbau bzw. der weiteren Verarbeitung der Werkstücke entfernt werden, um die anschließende Funktion zu gewährleisten. Das gilt insbesondere für Stanz- und Laserteile. Neben Ölen oder Spülflüssigkeit kommen in diesem Zusammenhang oft auch Fette, Wachse oder Emulsionen im Zusammenhang mit insbesondere einer spanenden Bearbeitung solcher Werkstücke zum Einsatz.

Zu diesem Zweck werden im Stand der Technik nach der EP 1 757 677 B1 eine Vorrichtung und ein Verfahren zum Entfernen von Ölen, Fetten oder dergleichen hydrophoben Bestandteilen von Oberflächen eines solchen Werkstückes mithilfe einer Anlage beschrieben. Dazu verfügt die Anlage über eine Bedüsungseinrichtung zum Aufbringen eines Trockenpulvers vorgegebener Porosität. Mithilfe einer Ablöseeinheit wird das die adsorbierten hydrophoben Bestandteile aufweisende Trockenpulver entfernt. Anschließend muss das Trockenpulver aufbereitet werden, was teilweise aufwendig und insbesondere energieintensiv ist.

Aus diesem Grund geht man bei einem alternativen Stand der Technik nach der DE 20 2013 012 237 U1 so vor, dass das Werkstück mithilfe eines die Reinigungskammer durchströmenden Luftstroms gereinigt wird. Anschließend kann der Luftstrom über einen Filter oder Abscheider zum Abscheiden der mithilfe des Luftstroms abgeführten Verunreinigungen wieder gereinigt werden. Der Luftstrom wird in diesem Zusammenhang mithilfe einer Vakuumquelle wie beispielsweise einem Saugebläse in einem geschlossenen Luftkreislauf geführt.

Vergleichbar geht die Vorrichtung zum Reinigen eines Objekts vor, die durch die DE 20 2020 107 100 U1 bekannt geworden ist. In diesem Fall verfügt die Reinigungskammer über einen hohlzylinderförmig ausgebildeten Mantel mit vertikal ausgerichteter Längsmittelachse, an dem ein Lufteinlass ausgebildet ist und dessen unteres axiale Ende entweder den Luftauslass bildet oder mit einer Stirnwand versehen ist. Dadurch lässt sich eine große Anzahl von Objekten bzw. Werkstücken in einer relativ kurzen Zeit reinigen.

Beim gattungsbildenden Stand der Technik nach der DE 10 2020 103 090 B3 ist eine Bewegungseinheit vorgesehen, die mit dem Werkstückhalter und/oder der Reinigungskammer verbunden ist. Während des Reinigungsvorganges sorgt die Bewegungseinheit für eine Relativbewegung zwischen dem Werkstückhalter und einer Lufteinlassöffnung. Außerdem ist eine aus zwei teilweise ineinander verschiebbar geführten Haubenteilen gebildete Haube vorgesehen. Die beiden Haubenteile lassen sich gegenläufig und relativ zueinander verschieben. Zu diesem Zweck ist eine Betätigungseinrichtung mit Ansteuerelektronik vorgesehen. Während eines Reinigungsvorganges wird die Betätigungseinrichtung derart angesteuert, dass die beiden Haubenteile voneinander weg in Öffnungsstellung bewegt und zumindest teilweise in dieser gehalten werden, so dass die Lufteinlassöffnung schlitzförmig zwischen den beiden Haubenteilen ausgebildet ist. Auf diese Weise soll erneut eine optimale Reinigung von Werkstücken ermöglicht werden.

Im Rahmen der US 2014/0020714 A1 geht es um eine Vorrichtung zum Reinigen von Werkstücken, bei welcher der Werkstückhalter als Schlitten ausgeformt ist. Dieser lässt sich mithilfe eines Linearantriebes bewegen. Eine zusätzliche Relativbewegung der Werkstücke gegenüber Ansaugöffnungen ist dagegen nicht vorgesehen.

Der Stand der Technik hat sich grundsätzlich bewährt, was die Reinigung von auf einem Werkstückhalter aufgenommenen Werkstücken mit einem Reinigungsluftstrom angeht. Allerdings fehlen bisher überzeugende Lösungen dahingehend, die Reinigungskammer fortlaufend zu bestücken und die Werkstückhalter inklusive Werkstück aus der Reinigungskammer wieder zu entfernen. Ein solcher fortlaufender Betrieb ist jedoch oftmals erforderlich, um eine besonders energieeffiziente Reinigung mit geringer Taktzeit zu realisieren. Hier will die Erfindung insgesamt Abhilfe schaffen.

Der Erfindung liegt das technische Problem zugrunde, eine derartige Vorrichtung zum Reinigen eines Werkstückes so weiterzuentwickeln, dass die Vorrichtung unschwer in eine Fertigungsstraße mit kontinuierlichem Vorschub und Abfuhr der Werkstücke integriert werden kann. Außerdem soll ein entsprechend gestaltetes Verfahren zur Verfügung gestellt werden.

Zur Lösung dieser technischen Problemstellung schlägt die Erfindung eine Vorrichtung nach Anspruch 1 und ein Verfahren gemäß dem Anspruch 11 vor.

Im Rahmen der Erfindung kommt also zunächst einmal und ganz wesentlich ein Linearantrieb zum Einsatz. Dieser kann beispielhaft als Zahnriemenförderer ausgebildet sein. Mithilfe des Linearantriebes werden die Reinigungskammer und der Werkstückhalter synchron angetrieben. Das heißt, die Reinigungskammer und der Werkstückhalter sowie das auf dem Werkstückhalter angeordnete Werkstück werden größtenteils in gleicher Richtung und mit gleicher Geschwindigkeit transportiert. Hierfür sorgt überwiegend der Linearantrieb. Bei dem Transport des Werkstückhalters und der Reinigungskammer stellt die Bewegungseinheit zusätzlich sicher, dass das Werkstück eine Relativbewegung gegenüber den Öffnungen der Reinigungskammer vollführt.

Bei diesen Öffnungen der Reinigungskammer handelt es sich typischerweise um zumindest eine Lufteinlassöffnung und wenigstens eine Luftabsaugöffnung. Der durch die Öffnungen der Reinigungskammer hindurchgeführte Reinigungsluftstrom wird dabei mithilfe der wenigstens einen Unterdruckeinrichtung erzeugt. Bei der Unterdruckeinrichtung kann es sich um eine Saugpumpe, ein Gebläse etc. handeln, welches folgerichtig an der einen bzw. den mehreren Luftabsaugöffnungen einen Unterdruck erzeugt, so dass über die eine oder die mehreren Lufteinlassöffnungen einströmende Luft den gewünschten Reinigungsluftstrom durch die Reinigungskammer ausprägt.

Dieser Reinigungsluftstrom sorgt bei seinem Weg beginnend an der betreffenden Lufteinlassöffnung hin zur Luftabsaugöffnung dafür, dass der hierbei passierte Werkstückhalter mit dem daran angeordneten Werkstück und insbesondere das Werkstück mithilfe des Reinigungsluftstroms gereinigt wird.

Dazu wird der Luftstrom so durch die Reinigungskammer geführt, dass zumindest im Bereich des zu reinigenden Werkstückes eine hohe Strömungsgeschwindigkeit des Reinigungsluftstromes beobachtet wird. Diese stellt sich erfindungsgemäß regelmäßig dadurch ein, dass ausgehend von der betreffenden Lufteinlassöffnung der Reinigungsluftstrom durch eine Querschnittsverengung geführt wird, in welcher sich das zu reinigende Werkstück findet, so dass aufgrund des an dieser Stelle erzeugten Venturi-Effektes die Strömungsgeschwindigkeit des Reinigungsluftstroms ansteigt. Dadurch kommt es zu einer besonders wirkungsvollen Luftreinigung des Werkstückes und werden anhaftende Späne, Stäube aber auch Flüssigkeiten wie Öl oder Spülflüssigkeit von der Oberfläche weggerissen und mit dem Reinigungsluftstrom abgeführt.

Ein in diesem Zusammenhang beispielsweise der Unterdruckeinrichtung vorgeschalteter Filter sorgt dafür, dass die zuvor genannten Bestandteile im Reinigungsluftstrom hieran abgeschieden werden. Das gilt einerseits für die Späne bzw. Stäube und andererseits etwaige Flüssigkeit, die sogar nach Abscheiden an dem Filter in einem Kreislauf wiederverwendet werden kann.

Um die Reinigungswirkung erfindungsgemäß noch zu intensivieren, kann zusätzlich so vorgegangen werden, dass der Werkstückhalter mit dem daran oder darauf angeordneten Werkstück zumindest beim Passieren der Reinigungskammer unter Rückgriff auf eine Vibrationseinrichtung in Vibrationen versetzt wird. Prozessunterstützend kann der Reinigungsluftstrom aufgewärmt werden, vorzugsweise durch Abwärme der Unterdruckeinrichtung. Durch die Aufwärmung des Reinigungsluftstromes lässt sich die Viskosität von beispielsweise am Werkstück anhaftendem Öl oder Wachs verändern, welches als Folge hiervon von dem Reinigungsluftstrom noch besser vom Werkstück abgelöst werden kann. Durch diese zusätzlichen Vibrationen stellt die Erfindung sicher, dass etwaige an dem Werkstück anhaftende Späne oder Stäube ebenso wie Flüssigkeit gelöst und durch den mit hoher Geschwindigkeit in diesem Bereich strömenden Reinigungsluftstrom mitgerissen und von der Oberfläche abgelöst werden. Dadurch wird die Reinigungswirkung zusätzlich noch intensiviert.

Nach weiterer vorteilhafter Ausgestaltung ist die Reinigungskammer wenigstens zweiteilig mit einer im oder am Werkstückhalter vorgesehenen Basis und einer die Basis wahlweise verschließenden Decke ausgebildet. Dabei wird zusätzlich erfindungsgemäß so vorgegangen, dass der Werkstückhalter auf einem Schlitten verfahrbar gelagert ist. Der Schlitten wird seinerseits mithilfe des Linearantriebes entlang einer Schlittenführung beaufschlagt. Dazu ist es denkbar, dass der Schlitten mithilfe des Linearantriebes durch ein in Linearrichtung der Schlittenführung fortschreitendes Magnetfeld bewegt wird. Es ist aber auch denkbar, dass der Linearantrieb beispielsweise über eine Spindel bzw. einen Spindelantrieb den Schlitten und damit den Werkstückhalter entlang der Schlittenführung verfährt. Dazu wird die Spindel in Rotationen versetzt und ist der Schlitten beispielsweise an einer auf der Spindel drehbar gelagerten Spindelmutter festgelegt, die sich infolge der Drehungen der Spindel in Linearrichtung bewegt. Auch Kombinationen sind in diesem Zusammenhang denkbar. Ebenso kann ein Zahnriemenförderer als Linearantrieb eingesetzt werden.

Der Werkstückhalter ist dabei typischerweise gegenüber dem Schlitten hubbeweglich gelagert. Auf diese Weise kann der Werkstückhalter zusammen mit der Basis als Bestandteil der Reinigungskammer gegen die Decke angestellt werden. Die Verbindung zwischen der Basis und der Decke erfolgt dabei zumindest kraftschlüssig. Selbstverständlich ist an dieser Stelle auch ein Reibschluss respektive Formschluss denkbar.

Auf diese Weise ist die Basis als Bestandteil der Reinigungskammer auf dem Werkstückhalter zunächst einmal und bei nicht vorhandener Decke von oben oder der Seite her zugänglich. Dadurch kann das Werkstück in die Basis als Bestandteil der Reinigungskammer eingebracht werden. Das lässt sich beispielsweise manuell, über einen Roboter oder sonst wie eine Handlingeinrichtung erreichen. Dabei versteht es sich, dass der Werkstückhalter und folglich die Basis der Reinigungskammer mit entsprechenden Führungen oder Halterungen für das betreffende Werkstück ausgerüstet ist.

Handelt es sich bei dem Werkstück vorteilhaft um ein rotationssymmetrisches Werkstück, so kann dieses beispielsweise auf einem das Werkstück aufnehmenden Lagerdorn platziert werden. Dadurch wird das Werkstück einwandfrei am Werkstückhalter in der Basis der Reinigungskammer gelagert. Das begünstigt die im Zusammenhang mit der Reinigung zusätzlich vorgenommene Relativbewegung des Werkstückes gegenüber den Öffnungen der Reinigungskammer. Denn dazu ist es lediglich erforderlich, dass mithilfe der Bewegungseinheit die Reinigungskammer, der Werkstückhalter und/oder das Werkstück als solches beaufschlagt wird.

Außerdem besteht hierdurch die weitergehende Möglichkeit, dass der Werkstückhalter je nach Bedarf mit unterschiedlich ausgebildeten Werkstücken ausgerüstet wird, so dass eine besonders effiziente Reinigung der in diesem Fall mehreren Werkstücke auf dem übereinstimmenden Werkstückhalter gelingt. Hierzu trägt ergänzend der Umstand bei, dass die Basis als Bestandteil der Reinigungskammer typischerweise einen Bestandteil des Werkstückhalters darstellt bzw. als in den Werkstückhalter eingelassene Vertiefung ausgebildet ist.

Das heißt, zur Realisierung der Basis reicht es erfindungsgemäß aus, dass der Werkstückhalter selbst die Funktion der Basis übernimmt und zu diesem Zweck eine oder mehrere das jeweilige Werkstück aufnehmende Vertiefungen aufweist. Die Vertiefung ist dazu mit dem zuvor bereits angesprochenen und beispielhaft genannten Lagerdorn ausgerüstet, auf welchen das zu reinigende Werkstück aufgesteckt wird. Das kann - wie gesagt - manuell, mithilfe eines Roboters oder sonst wie mit einem Handlingwerkzeug erfolgen. Da folglich die Basis der Reinigungskammer von dem Werkstückhalter gebildet wird, ist es zur Definition der Reinigungskammer lediglich noch erforderlich, dass der Werkstückhalter insgesamt gegen die fragliche Decke angestellt wird.

Wenn auf diese Weise zwischen dem die Basis bildenden Werkstückhalter und der Decke der zuvor bereits angesprochene Kraftschluss im Minimum beobachtet wird, ist die Reinigungskammer insgesamt geschlossen und kann anschließend mithilfe der Unterdruckreinigung der gewünschte Reinigungsluftstrom durch die Öffnungen erzeugt werden, welcher im Bereich des zu reinigenden Werkstückes durch gezielte Querschnittsverengungen beschleunigt wird, um am Werkstück anhaftende Späne oder Staub ebenso wie denkbare Flüssigkeiten wirkungsvoll abzulösen. Hierin sind die wesentlichen Vorteile zu sehen.

Nach weiterer vorteilhafter Ausgestaltung kann die Decke mit einem eigenen Antrieb ausgerüstet werden und ist zumindest als Bestandteil eines um Transportrollen geführten Trums ausgebildet. Dazu ist wenigstens eine Transportrolle mit dem Antrieb ausgerüstet. Der Antrieb der betreffenden Transportrolle ist dabei so gewählt, dass sich das um die Transportrollen geführte Trum, bei dem es sich vorteilhaft um ein um die Transportrollen geführtes Förderband handelt, mit gleicher Geschwindigkeit wie der Linearantrieb fortbewegt wird. Auf diese Weise kommt es zu dem zuvor bereits angesprochenen synchronen Antrieb der Reinigungskammer und des Werkstückhalters und damit des Werkstückes. Bei dem angesprochenen Förderband handelt es sich typischerweise um ein Zahnriemenförderband, welches an zugehörigen Öffnungen einen Unterdruck in der Reinigungskammer erzeugt. Das Förderband umschließt dabei vorzugsweise zumindest teilweise die Unterdruckeinrichtung. Da das Förderband an der Unterdruckeinrichtung vorbeigeführt wird, stellt sich an den Öffnungen im Förderband der gewünschte Unterdruck ein, welcher dann auch in der Reinigungskammer zur Verfügung steht, weil die zugehörige Öffnung des Förderbandes als gleichsam Unterdruckeinrichtung fungiert. Zugleich definiert die fragliche Öffnung im Förderband zumindest eine Luftabsaugöffnung.

Die Bewegungseinheit ist erfindungsgemäß als eine das Werkstück beaufschlagende Rolle ausgebildet, welche zwangsrotiert wird. Dazu ist die Rolle zwischen dem Werkstück und einer Führung rotierend einklemmbar. Die ortsfeste Führung findet sich dabei meistens in einem Bereich, in welchem auch das Förderband realisiert und vorgesehen ist. Meistens sind beidseitige ortsfeste Führungen vorgesehen, welche den auf dem Schlitten verfahrbaren Werkstückhalter zwischen sich aufnehmen. Sobald der Werkstückhalter zwischen die beidseitigen Führungen eintaucht, kommt es dazu, dass die betreffende Rolle rotierend eingeklemmt wird. Die Rolle wird folglich zwangsrotiert und sorgt hierdurch zugleich für eine Rotation des im allgemeinen auf dem Lagerdorn gelagerten Werkstückes, so dass die gewünschte Relativbewegung des Werkstückes gegenüber den Öffnungen für den Reinigungsluftstrom beobachtet wird. Auf diese Weise ist sichergestellt, dass der durch die Querschnittsverengung hindurchgeführte Reinigungsluftstrom das Werkstück bei seiner Bewegung entlang der beiden Führungen zumindest einmal passiert. Dabei wird das Werkstück wenigstens einmal um seine Achse rotiert, so dass das Werkstück die gewünschte Reinigung über seine gesamte Oberfläche erfährt.

Bei dem auf diese Weise gereinigten Werkstück handelt es sich - wie gesagt - typischerweise und vorzugsweise um ein rotationssymmetrischen Werkstück. Grundsätzlich können mit der beschriebenen Vorrichtung auch nicht rotationssymmetrische Werkstücke gereinigt werden. Das setzt allerdings im Allgemeinen einen das Werkstück aufnehmenden Halter voraus, welcher dann seinerseits im Allgemeinen auf dem Lagerdorn gelagert ist und über die Bewegungseinheit in Rotationen versetzt wird.

Jedenfalls findet insgesamt eine besonders wirksame Trockenreinigung statt, welche zugleich die Möglichkeit eröffnet, etwaige abgelöste Flüssigkeit, Öl etc. wieder verwerten zu können. Gleiches gilt für mithilfe des im Allgemeinen der Unterdruckeinrichtung vorgeschalteten Filters zurückgehaltene Stäube oder Späne, die ebenfalls einer Wiederverwertung zugeführt werden können. Bei den fraglichen Werkstücken kann es sich besonders vorteilhaft um beispielsweise Bestandteile eines Elektromotors wie beispielsweise Rotoren, Statoren aber auch sämtliche anderen Produkte handeln, die vorteilhaft in der Automotiv-Herstellung benötigt werden, wie beispielsweise Lagerbuchsen, Gelenkschalen etc.

Die im Zusammenhang mit der Bewegungseinheit vorgesehene Rolle bzw. Klemmrolle kann dabei insgesamt federnd gelagert sein. Außerdem versteht es sich, dass die Rolle bzw. Klemmrolle bedarfsweise zumindest über eine einen Reibschluss bewirkende Oberfläche verfügt, beispielsweise eine Gummi- oder Kunststoffbeschichtung aufweist oder selbst aus Gummi oder Kunststoff hergestellt ist. Auf diese Weise ist eine einwandfreie Übertragung von Rotationen seitens der Rolle bzw. Klemmrolle auf das betreffende Werkstück sichergestellt.

Die zusätzlich vorgesehene Vibrationseinrichtung intensiviert die Reinigungswirkung, ist allerdings insgesamt als Option anzusehen, folglich nicht unbedingt erforderlich. So oder so findet eine komplette Konturreinigung des betreffenden Werkstückes statt, weil dieses beim Reinigungsvorgang wenigstens eine Umdrehung vollführt. Selbstverständlich liegt es auch im Rahmen der Erfindung, dass das Werkstück beim Passieren der Vorrichtung mehr als eine Umdrehung absolviert.

Von besonderer Bedeutung ist schließlich der Umstand, dass die Vorrichtung steuerungstechnisch an eine die Werkstücke herantransportierende und abtransportierende Förderanlage nicht notwendigerweise angepasst werden muss bzw. von der Fördergeschwindigkeit abhängt. Vielmehr können sowohl der Linearantrieb als auch der Antrieb für die wenigstens eine Transportrolle des Förderbandes grundsätzlich aufeinander abgestimmt sein, allerdings unabhängig von der Geschwindigkeit der fraglichen Förderanlage ausgelegt werden. Es reicht in dem Zusammenhang hauptsächlich eine mechanische Kopplung dergestalt, dass die zu reinigenden Werkstücke dem betreffenden Werkstückhalter zugeführt werden. Das kann - wie gesagt - manuell oder mithilfe eines Roboters oder einer sonstigen Handlingeinrichtung vorgenommen werden. Gleiches gilt für den Abtransport der gereinigten Werkstücke, die ausgangsseitig der Vorrichtung wiederum von einem Roboter oder einer Handlingapparatur aufgenommen und der weiteren Verarbeitung zugeführt werden können. Dadurch kann die betreffende Vorrichtung unschwer in eine Förderanlage integriert werden und hält sich der für eine etwaige Anpassung erforderliche Aufwand in engen Grenzen. In Verbindung mit einem besonders energieeffizienten Betrieb bei zugleich hervorragender Reinigungswirkung sind die wesentlichen Vorteile zu sehen. - Gegenstand der Erfindung ist auch ein Verfahren zum Reinigen eines Werkstückes, wie es im Anspruch 11 im Detail beschrieben wird.

Nachfolgend wird die Erfindung anhand einer lediglich ein Ausführungsbeispiel darstellenden Zeichnung näher erläutert; es zeigen:
Fig. 1 die erfindungsgemäße Vorrichtung in einer perspektivischen Gesamtansicht,
Fig. 2 eine Seitenansicht des Gegenstandes nach Fig. 1,
Fig. 3 einen schematischen Querschnitt durch die Vorrichtung nach Fig. 1,
Fig. 4 einen vergrößerten Ausschnitt aus Fig. 3 und
Fig. 5 eine Aufsicht auf den Werkstückhalter inklusive ihrem aufgenommenen Werkstück.

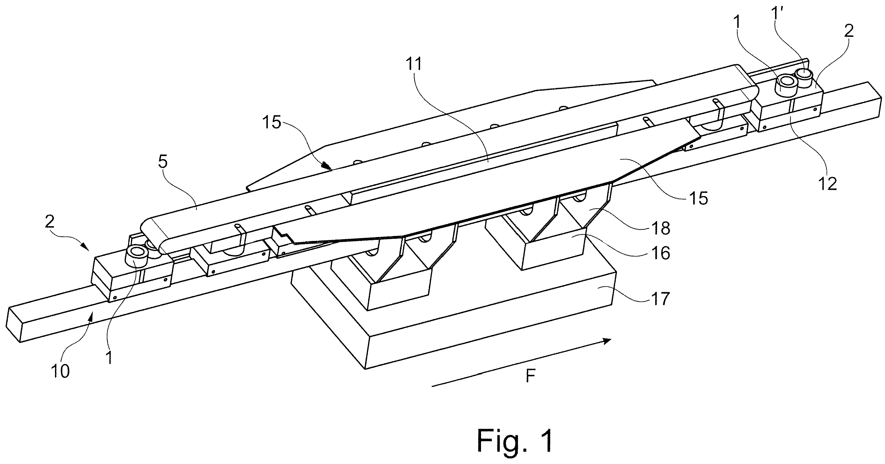

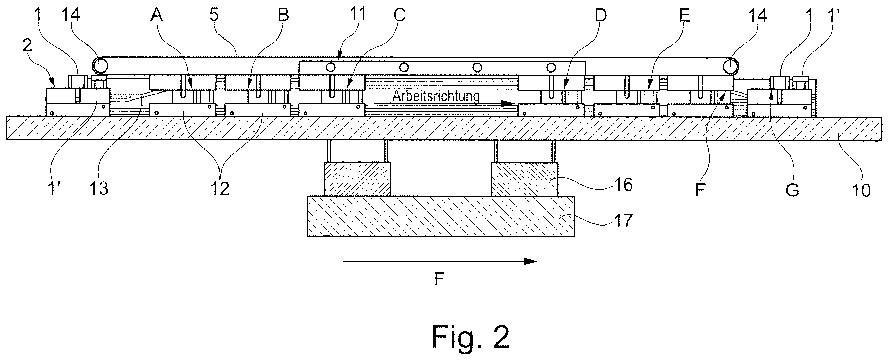

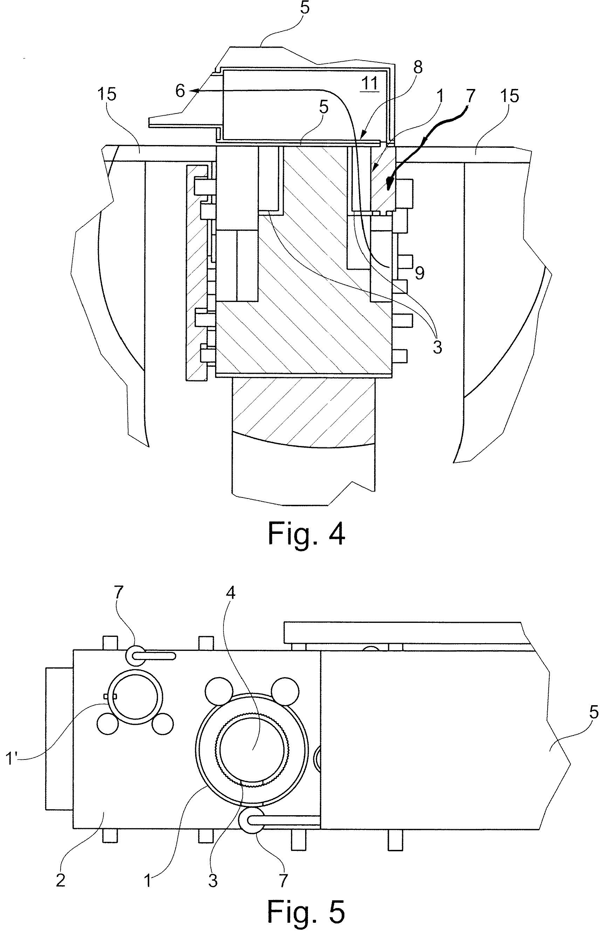

In den Figuren ist eine Vorrichtung zum Reinigen eines Werkstückes 1 dargestellt. Bei dem fraglichen Werkstück 1 handelt es sich ausweislich der Darstellung in den Fig.1 und 2 um ein rotationssymmetrisches Werkstück 1, beispielsweise einen Rotor oder Stator als Bestandteile eines anschließend zu fertigenden Elektromotors. Das gilt selbstverständlich nur beispielhaft und ist keinesfalls einschränkend zu verstehen. Die Reinigung des Werkstückes 1 erfolgt dabei durch Luft, ist also als Trockenreinigung angelegt. Dazu wird das betreffende Werkstück 1 zunächst einmal auf einem Werkstückhalter 2 angeordnet. Anhand der Fig. 5 mit dem Blick auf den Werkstückhalter 2 erkennt man und kann nachvollziehen, dass neben dem Werkstück 1 auch ein anderes weiteres Werkstück 1', in, auf oder an dem Werkstückhalter 2 aufgenommen werden kann. Nach dem Ausführungsbeispiel und nicht einschränkend ist der Werkstückhalter 2 zu diesem Zweck mit wenigstens einer Vertiefung 3 ausgerüstet, die als im oder an dem Werkstückhalter 2 vorgesehene Basis 3 einer anschließend noch näher zu beschreibenden Reinigungskammer 3, 5 fungiert und ausgebildet ist. Die Basis 3 ist zu diesem Zweck mit einem im Innern vorgesehenen Lagerdorn 4 ausgerüstet, der zur Aufnahme des Werkstückes 1 dient.

Bei einem Vergleich der Fig. 1 und 5 kann man nachvollziehen, dass das zu reinigende Werkstück 1, 1' beispielsweise manuell oder mithilfe eines Greifers, eines Roboters oder sonst wie von oben in die Vertiefung 3 eingesetzt wird und hierbei auf den Lagerdorn 4 aufgesteckt wird. Jetzt ist das Werkstück 1, 1' im bzw. am Werkstückhalter 2 positioniert, um die anschließende Reinigung mithilfe von Luft zu erfahren.

Dazu ist neben der bereits angesprochenen Vertiefung 3 im Werkstückhalter 2 als Basis 3 der Reinigungskammer 3, 5 zusätzlich noch eine die Basis 3 wahlweise verschließende Decke 5 als weiterer Bestandteil der Reinigungskammer 3, 5 vorgesehen. Das heißt, die Basis 3 ist zunächst offen, um insbesondere das Werkstück 1, 1' platzieren zu können, nämlich nach dem Ausführungsbeispiel auf dem Lagerdorn 4 im Innern der Vertiefung 3 bzw. Basis 3 der Reinigungskammer 3, 5. Wenn nun der Werkstückhalter 2 zusammen mit dem Werkstück 1 entlang der Vorrichtung in der Förderrichtung F transportiert wird, kommt es nun dazu, dass die Vertiefung 3 mithilfe einer Decke 5 verschlossen wird, so dass im Anschluss hieran die Reinigungskammer 3, 5 geschlossen ist und die Reinigung des Werkstückes 1 im Innern der geschlossenen Reinigungskammer 3, 5 vollzogen werden kann.

Damit bei diesem Vorgang das Werkstück 1 über seine gesamte Oberfläche gesehen mit einem nachfolgend noch näher zu beschreibenden Reinigungsluftstrom 6 beaufschlagt werden kann, ist eine Bewegungseinheit 7 vorgesehen, mit deren Hilfe eine Relativbewegung des Werkstückes 1 gegenüber Öffnungen 8, 9 in der Reinigungskammer 3, 5 erzeugt wird. Bei den angesprochenen Öffnungen 8, 9 in der Reinigungskammer 3, 5 handelt es sich einerseits um eine Lufteinlassöffnung 9 und andererseits eine Luftabsaugöffnung 8, die man am besten anhand der Schnittdarstellung in der Fig. 4 nachvollziehen kann. Über die Lufteinlassöffnung 9 gelangt dabei Außenluft in die Reinigungskammer 3, 5 und verlässt die Reinigungskammer 3, 5 anschließend über die Luftabsaugöffnung 8, so dass auf diese Weise der in der Fig. 4 schematisch eingezeichnete Reinigungsluftstrom 6 definiert wird. Selbstverständlich können auch jeweils mehrere Öffnungen 8, 9 realisiert werden.

Zusätzlich ist noch ein Linearantrieb 10 für den überwiegend synchronen Antrieb der Reinigungskammer 3, 5 und des Werkstückhalters 2 und damit des Werkstückes 1, 1' vorgesehen. Ebenfalls eine Unterdruckeinrichtung 11 zur Erzeugung des Reinigungsluftstroms 6 durch die zuvor bereits angesprochenen Öffnungen 8, 9 in der Reinigungskammer 3, 5, nämlich beginnend bei der Lufteinlassöffnung 9 und endend in der Luftabsaugöffnung 8, welche mithilfe der Unterdruckeinrichtung 11 beaufschlagt wird.

Die Ausgestaltung des Linearantriebes 10 kann dabei auf verschiedene Art und Weise erfolgen. Beispielsweise ist es denkbar, dass der Linearantrieb 10 ein in der Förderrichtung F fortschreitendes elektromagnetisches Feld erzeugt und auf diese Weise einzelne und in der Förderrichtung F bewegbare Schlitten 12 in der Förderrichtung F bewegt. Man erkennt, dass der betreffende Werkstückhalter 2 auf jeweils einem Schlitten 12 verfahrbar gelagert ist und zusammen mit dem Schlitten 12 durch den Linearantrieb 10 entlang der Förderrichtung F bzw. entlang der Schlittenführung bewegt wird. Das heißt, der jeweilige Schlitten 12 wird mithilfe des Linearantriebes 10 beaufschlagt, was - wie gesagt - durch ein in der Förderrichtung F fortschreitendes elektromagnetisches Feld erfolgen kann oder schlicht und ergreifend mechanisch mithilfe eines Spindelantriebes, wie dies einleitend im Detail bereits beschrieben wurde. Auch ein Zahnriemenförderer ist denkbar.

Insbesondere anhand der seitlichen Darstellung in der Fig. 2 wird deutlich, dass der betreffende Werkstückhalter 2 gegenüber dem Schlitten 12 hubbeweglich gelagert ist. Dazu ist die Vorrichtung mit einer Hubschienenführung 13 ausgerüstet, welche dafür sorgt, dass beim Transport des Werkstückhalters 2 auf dem Schlitten 12 entlang der Förderrichtung F der Werkstückhalter 2 die insbesondere anhand der Fig. 2 nachvollziehbare Hubbewegung gegenüber dem Schlitten 12 vollführen kann. In diesem Zusammenhang lassen sich insgesamt mehrere in der Fig. 2 wiedergegebene Phasen A bis G voneinander unterscheiden, die nachfolgend näher erläutert werden. So oder so ist die Reinigungskammer 3, 5 zunächst hinsichtlich ihrer Basis 3 offen und wird erst dann mit der Decke 5 verschlossen. Dadurch kann das betreffende Werkstück 1 bzw. 1' in die Vertiefung 3 bzw. die Basis 3 eingebracht werden. Mithilfe der Hubschienenführung 13 wird anschließend der Werkstückhalter 2 gegen die Decke 5 angestellt. Hierbei kommt es zu einer zumindest kraftschlüssigen Verbindung zwischen der Basis 3 der Reinigungskammer 3, 5 und der Decke 5.

Dazu ist die Decke 5 mit einem eigenen Antrieb ausgerüstet. Man erkennt, dass die Decke 5 zumindest als Bestandteil eines um angedeutete Transportrollen 14 geführten Trums ausgebildet ist. Dabei ist wenigstens eine der Transportrollen 14 mit einem eigenen Antrieb ausgerüstet. Bei dem Trum handelt es sich um ein um die Transportrollen 14 geführtes Förderband 5. Das Förderband 5 ist dabei als Zahnriemenförderband ausgebildet. Außerdem definiert das Förderband 5 die Decke 5 der Reinigungskammer 3, 5, gegen welche die Basis 3 mithilfe der Hubschienenführung 13 angestellt wird.

Das Förderband 5 kann dabei ganz oder teilweise die Unterdruckeinrichtung 11 umschließen, wie man dies anhand der Fig. 2 nachvollziehen kann. Außerdem ist die Auslegung so getroffen, dass die Unterdruckeinrichtung 11 an zugehörigen Öffnungen 8 des Förderbandes 5, nämlich den Luftabsaugöffnungen 8, den gewünschten Unterdruck in der Reinigungskammer 3, 5 erzeugt. Dadurch wird insgesamt der zuvor bereits angesprochene Reinigungsluftstrom 6 definiert.

Bei der Bewegungseinheit 7 handelt es sich erfindungsgemäß um eine das Werkstück 1 bzw. 1' beaufschlagende Rolle 7. Die Rolle 7 wird dabei zwangsrotiert. Dazu ist die Rolle 7 zwischen dem Werkstück 1 bzw. 1' und zusätzlich einer Führung 15 rotierend einklemmbar. Tatsächlich ist die Auslegung so getroffen, dass beim Transport des betreffenden Schlittens 12 und des hiermit getragenen Werkstückhalters 2 entlang der Förderrichtung F die fragliche Rolle 7 in Kontakt mit der jeweils seitlichen ortsfesten Führung 15 kommt und dadurch in Rotationen versetzt wird. Diese Rotationen der Rolle 7 werden dann auf das Werkstück 1, 1' übertragen, welches als Folge hiervon gegenüber dem ortsfesten Lagerdorn 4 rotiert, und zwar innerhalb der Vertiefung bzw. Basis 3 als Bestandteil der Reinigungskammer 3, 5.

Anhand der Schnittdarstellung in der Fig. 4 erkennt man, dass die Vertiefung 3 zusammen mit dem Lagerdorn 4 und dem hierin aufgenommenen Werkstück 1 eine beidseitige Schlitzführung für den Reinigungsluftstrom 6 definiert, welche dafür sorgt, dass die über die Lufteinlassöffnung 9 eintretende Luft bis hin zur Luftabsaugöffnung 8 auf diese Weise eine Querschnittsverengung im Bereich des betreffenden Werkstückes 1 bzw. 1' passiert. Dadurch kommt es aufgrund des Venturi-Effektes zu einer signifikanten Erhöhung der Strömungsgeschwindigkeit des Reinigungsluftstroms 6 und dazu, dass an der Oberfläche des Werkstückes 1 bzw. 1' anhaftende Stäube, Späne aber auch Flüssigkeit vom Reinigungsluftstrom 6 mitgerissen werden.

Ein nicht dargestellter und der Unterdruckeinrichtung 11 vorgeschalteter Filter sorgt nun dafür, dass die betreffenden Stäube oder Späne zusammen mit der mitgeführten Flüssigkeit abgeschieden und gegebenenfalls wieder verwertet werden können, wie dies einleitend bereits beschrieben wurde. Der Reinigungsluftstrom 6 kann darüber hinaus aufgewärmt werden, um die Viskosität anhaftender Öle, Wachse, Spülflüssigkeiten etc. zu verändern, damit diese besser von dem betreffenden Werkstück 1 bzw. 1', abgelöst werden können.

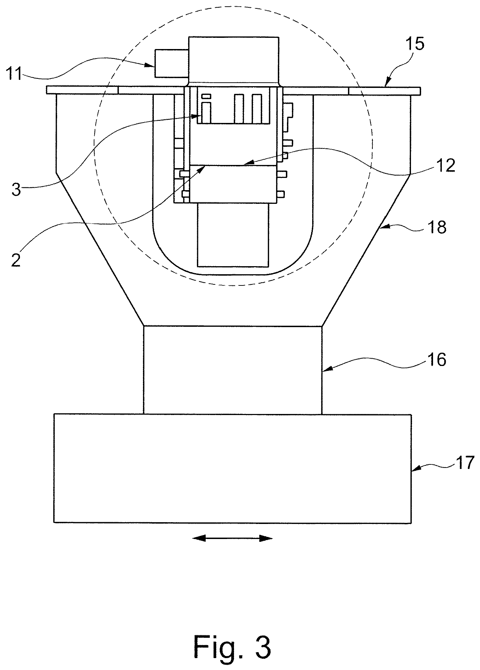

Um die Reinigungswirkung noch zu intensivieren, ist die fragliche Vorrichtung zusätzlich mit einer Vibrationseinrichtung 16, 17, 18 ausgerüstet. Die Vibrationseinrichtung 16, 17, 18 setzt sich nach dem Ausführungsbeispiel entsprechend der Darstellung in der Fig. 3 aus einem Vibrationserreger 16, einer Gegenmasse 17 und einer Vibrationsspange 18 zusammen, die die vom Vibrationserreger 16 erzeugten Vibrationen in der in Fig. 3 durch einen Doppelpfeil angedeuteten Querrichtung im Vergleich zur Förderrichtung F auf die Führungen 15 und damit die einzelnen Werkstückhalter 2 und folglich auf die zu reinigenden Werkstücke 1, 1' überträgt. Dadurch wird die Reinigungswirkung im Innern der Reinigungskammer 3, 5 noch einmal intensiviert, weil etwaige durch zusätzliche Adhäsionskräfte von Flüssigkeiten anhaftende Späne oder Stäube durch die seitens des Vibrationserregers 16 eingetragenen Vibrationen zusätzlich vom betreffenden Werkstück 1 bzw. 1' gelöst werden.

Nachfolgend wird die Funktionsweise der Vorrichtung anhand der einzelnen Schrittabfolgen A bis G entsprechend der Darstellung in der Fig. 2 näher erläutert. Man erkennt, dass links vom ersten Schritt A das betreffende Werkstück 1, 1' im Innern der Vertiefung 3 platziert und auf den ortsfesten Lagerdorn 4 aufgesteckt wird. Gleichzeitig wird der Schlitten 12 mit dem darauf gelagerten Werkstückhalter 2 durch den Linearantrieb 10 in der Förderrichtung F bewegt.

Im Bereich A wird der Werkstückhalter 2 mithilfe der Hubschienenführung 13 gegenüber dem Schlitten 12 angehoben und kommt es dazu, dass folglich die Basis 3 der Reinigungskammer 3, 5 gegen die die Basis 3 wahlweise verschließende Decke 5 angestellt wird, nämlich gegen den um die Transportrollen 14 umlaufend angetriebenen Fördergurt bzw. das Förderband 5.

Bei der weiteren Bewegung des Werkstückhalters 2 zur Position B wird der Werkstückhalter 2 von dem Schlitten 12 entkoppelt und im Bereich C sorgen dann die beiden seitlichen Führungen 15 dafür, dass die Rollen 7 und damit auch das betreffende Werkstück 1 bzw. 1' rotieren. Mit der Einfahrt unter die Unterdruckeinrichtung 11 beginnt dann die Reinigungswirkung im Innern der Reinigungskammer 3, 5 und erfolgt die Ausbildung des Reinigungsluftstroms 6 durch die Öffnungen 8, 9.

Im Bereich D ist die Reinigung größtenteils beendet, weil der betreffende Werkstückhalter 2 die Unterdruckeinrichtung 11 verlässt und folglich an den Luftabsaugöffnungen 8 des Förderbandes 5 in dem Bereich jenseits der Unterdruckeinrichtung 11 kein Unterdruck mehr erzeugt wird.

Im Bereich E bzw. F wird der betreffende Werkstückhalter 2 erneut in Richtung auf den Schlitten 12 mithilfe der Hubschienenführung 13 abgesenkt und fährt anschließend aus der Vorrichtung im Bereich G aus. Während der Anlage des Werkstückhalters 2 an dem umlaufenden Förderband 5 werden die Werkstückhalter 2 mithilfe des Förderbandes 5 oder zusätzlich durch den Linearantrieb 10 über den zugehörigen Schlitten 12 in der Förderrichtung F bewegt. Grundsätzlich kann aber auch der Linearantrieb 10 durchgängig für den Antrieb der Werkstückhalter 2 über die zwischengeschalteten Schlitten 12 sorgen. Das ist für die grundsätzliche und beschriebene Funktionsweise unerheblich.

## Patentansprüche

1. Vorrichtung zum Reinigen eines Werkstückes (1, 1'), mit wenigstens einer Reinigungskammer (3, 5) zur Aufnahme des auf einem Werkstückhalter (2) angeordneten Werkstückes (1, 1'), wobei der Werkstückhalter (2) auf einem Schlitten (12) verfahrbar gelagert ist und zusammen mit dem Schlitten (12) durch einen Linearantrieb (10) entlang einer Förderrichtung (F) bewegbar ist, ferner mit wenigstens einer Unterdruckeinrichtung (11) zur Erzeugung eines durch Öffnungen (8, 9) der Reinigungskammer (3, 5) hindurchgeführten Reinigungsluftstroms (6), und mit einer die Reinigungskammer (3, 5) und den Werkstückhalter (2) und/oder das Werkstück (1, 1') beaufschlagenden Bewegungseinheit (7) zur Erzeugung einer Relativbewegung des Werkstückes (1, 1') gegenüber den Öffnungen (8, 9), **dadurch gekennzeichnet, dass**
der Linearantrieb (10) für den synchronen Antrieb der Reinigungskammer (3, 5) und des Werkstückhalters (2) und damit des Werkstückes (1, 1') vorgesehen ist, wobei
die Bewegungseinheit (7) als das Werkstück (1, 1') beaufschlagende Rolle (7) ausgebildet ist, und wobei die fragliche Rolle (7) dazu eingerichtet ist, beim Transport des betreffenden Schlittens (12) entlang der Förderrichtung (F) in Kontakt mit einer seitlichen ortsfesten Führung (15) zu kommen und dadurch in Rotation versetzt zu werden.

2. Vorrichtung nach Anspruch 1, **dadurch gekennzeichnet, dass** die Reinigungskammer (3, 5) wenigstens zweiteilig mit einer im oder am Werkstückhalter (2) vorgesehenen Basis (3) und einer die Basis (3) wahlweise verschließenden Decke (5) ausgebildet ist.

3. Vorrichtung nach Anspruch 1 oder 2, **dadurch gekennzeichnet, dass** der Werkstückhalter (2) gegenüber dem Schlitten (12) hubbeweglich gelagert ist.

4. Vorrichtung nach einem der Ansprüche 1 bis 3, **dadurch gekennzeichnet, dass** der Werkstückhalter (12) zusammen mit der Basis (3) der Reinigungskammer (3, 5) gegen die Decke (5) anstellbar ist.

5. Vorrichtung nach einem der Ansprüche 2 bis 4, **dadurch gekennzeichnet, dass** die Basis (3) und die Decke (5) zumindest kraftschlüssig miteinander verbindbar sind.

6. Vorrichtung nach einem der Ansprüche 2 bis 5, **dadurch gekennzeichnet, dass** die Decke (5) mit einem eigenen Antrieb ausgerüstet ist.

7. Vorrichtung nach einem der Ansprüche 2 bis 6, **dadurch gekennzeichnet, dass** die Decke (5) zumindest als Bestandteil eines um Transportrollen (14) geführten Trums ausgebildet ist.

8. Vorrichtung nach Anspruch 7, **dadurch gekennzeichnet, dass** wenigstens eine Transportrolle (14) mit dem Antrieb ausgerüstet ist.

9. Vorrichtung nach Anspruch 7 oder 8, **dadurch gekennzeichnet, dass** das Trum als um die Transportrollen (14) geführtes Förderband (5) ausgebildet ist.

10. Vorrichtung nach Anspruch 9, **dadurch gekennzeichnet, dass** das Förderband (5) eingerichtet ist, mittels der umschlossenen Unterdruckeinrichtung (11) an zugehörigen Öffnungen (8) einen Unterdruck in der Reinigungskammer (3, 5) zu erzeugen.

11. Verfahren zum Reinigen eines Werkstückes (1, 1') mit wenigstens einer Reinigungskammer (3, 5) zur Aufnahme des auf einen Werkstückhalter (2) angeordneten Werkstückes (1, 1'), wobei der Werkstückhalter (2) auf einem Schlitten (12) verfahrbar gelagert ist und zusammen mit dem Schlitten (12) durch einen Linearantrieb (10) entlang einer Förderrichtung (F) bewegt wird, wonach eine Unterdruckeinrichtung (11) einen Reinigungsluftstrom (6) durch Öffnungen (8, 9) der Reinigungskammer (3, 5) erzeugt, und wonach eine Bewegungseinheit (7) die Reinigungskammer (3, 5) und den Werkstückhalter (2) und/oder das Werkstück (1, 1') beaufschlagt, um eine Relativbewegung des Werkstückes (1, 1') gegenüber den Öffnungen (8, 9) zu erzeugen,
**dadurch gekennzeichnet, dass**
mithilfe des Linearantriebes (10) ein synchroner Antrieb der Reinigungskammer (3, 5) und des Werkstückhalters (2) und damit des Werkstückes (1, 1') bewerkstelligt wird, wobei
die Bewegungseinheit (7) als das Werkstück (1, 1') beaufschlagende Rolle (7) ausgebildet ist, und wobei
beim Transport des betreffenden Schlittens (12) und des hiermit getragenen Werkstückhalters (2) entlang der Förderrichtung (F) die fragliche Rolle (7) in Kontakt mit einer seitlichen ortsfesten Führung (15) kommt und dadurch in Rotationen versetzt wird.

## Claims

1. A device for cleaning a workpiece (1, 1'), having: at least one cleaning chamber (3, 5) for receiving the workpiece (1, 1'), which is arranged on a workpiece holder (2), wherein the workpiece holder (2) is mounted movably on a slide (12) and is movable together with the slide (12) along a conveying direction (F) by means of a linear drive (10); also at least one vacuum apparatus (11) for generating a cleaning air flow (6), which is guided through openings (8, 9) in the cleaning chamber (3, 5); and a movement unit (7), which applies load to the cleaning chamber (3, 4) and the workpiece holder (2) and/or the workpiece (1, 1') in order to generate a relative movement of the workpiece (1, 1') relative to the openings (8, 9),
**characterised in that**
the linear drive (10) is provided for synchronously driving the cleaning chamber (3, 5) and the workpiece holder (2) and thus the workpiece (1, 1'), wherein the movement unit (7) is designed as a roller (7) that applies load to the workpiece (1, 1'), and wherein the roller (7) in question is designed to come into contact with a lateral, stationary guide (15) and thereby to be set in rotation when the relevant slide (12) is transported along the conveying direction (F).

2. The device according to Claim 1, **characterised in that** the cleaning chamber (3, 5) is formed in at least two parts, with a base (3), which is provided in or on the workpiece holder (2), and a ceiling (5), which optionally closes the base (3).

3. The device according to Claim 1 or 2, **characterised in that** the workpiece holder (2) is mounted in a vertically movable manner relative to the slide (12).

4. The device according to one of Claims 1 to 3, **characterised in that** the workpiece holder (12) together with the base (3) of the cleaning chamber (3, 5) can be placed against the ceiling (5).

5. The device according to one of Claims 2 to 4, **characterised in that** the base (3) and the ceiling (5) can be connected to one another at least force-fittingly.

6. The device according to one of Claims 2 to 5, **characterised in that** the ceiling (5) is equipped with its own drive.

7. The device according to one of Claims 2 to 6, **characterised in that** the ceiling (5) is designed at least as a component of a run guided around transport rollers (14).

8. The device according to Claim 7, **characterised in that** at least one transport roller (14) is equipped with the drive.

9. The device according to Claim 7 or 8, **characterised in that** the run is designed as a conveyor belt (5) that is guided around the transport rollers (14).

10. The device according to Claim 9, **characterised in that** the conveyor belt (5) is designed to generate a vacuum in the cleaning chamber (3, 5) at associated openings (8) by means of the enclosed vacuum apparatus (11).

11. A method for cleaning a workpiece (1, 1'), using at least one cleaning chamber (3, 5) for receiving the workpiece (1, 1'), which is arranged on a workpiece holder (2), wherein the workpiece holder (2) is mounted movably on a slide (12) and is moved together with the slide (12) along a conveying direction (F) by means of a linear drive (10), after which a vacuum apparatus (11) generates a cleaning air flow (6) through openings (8, 9) in the cleaning chamber (3, 5), and after which a movement unit (7) applies load to the cleaning chamber (3, 5) and the workpiece holder (2) and/or the workpiece (1, 1') in order to generate a relative movement of the workpiece (1, 1') relative to the openings (8, 9), **characterised in that**
synchronous driving of the cleaning chamber (3, 5) and the workpiece holder (2) and thus the workpiece (1, 1') is effected with the aid of the linear drive (10), wherein
the movement unit (7) is designed as a roller (7) that applies load to the workpiece (1, 1'), and wherein
the roller (7) in question comes into contact with a lateral, stationary guide (15) and is thereby set in rotation when the relevant slide (12) and the workpiece holder (2) carried therewith is transported along the conveying direction (F).

## Revendications

1. Dispositif, destiné à nettoyer une pièce à usiner (1, 1'), pourvu d'au moins une chambre de nettoyage (3, 5) pour recevoir une pièce à usiner (1, 1') placée sur un porte-pièce (2), le porte-pièce (2) étant logé de manière mobile sur un chariot (12) et déplaçable conjointement avec le chariot (12) par un entraînement linéaire (10), le long d'une direction de convoyage (F),
pourvu par ailleurs d'au moins un système de dépression (11) pour générer un courant d'air (6) de nettoyage guidé à travers des orifices (8, 9) de la chambre de nettoyage (3, 5) et pourvu d'une unité de déplacement (7), sollicitant la chambre de nettoyage (3, 5) et le porte-pièce (2) et/ou la pièce à usiner (1, 1'), pour générer un déplacement relatif de la pièce à usiner (1, 1') par rapport aux orifices (8, 9),
**caractérisé en ce que**
l'entraînement linéaire (10) est prévu pour l'entraînement synchrone de la chambre de nettoyage (3, 5) et du porte-pièce (2) et ainsi de la pièce à usiner (1, 1'),
l'unité de déplacement (7) étant conçue sous la forme d'un galet (7) sollicitant la pièce à usiner (1, 1') et le galet (7) en question étant configuré pour, lors du transport du chariot (12) concerné, arriver en contact dans la direction de convoyage (F) avec un guidage (15) latéral stationnaire et être mis en rotation de ce fait.

2. Dispositif selon la revendication 1, **caractérisé en ce que** la chambre de nettoyage (3, 5) est conçue au moins en deux parties, avec une base (3) prévue dans ou sur le porte-pièce (2) et avec un plafond (5) fermant sélectivement la base (3).

3. Dispositif selon la revendication 1 ou 2, **caractérisé en ce que** le porte-pièce (2) est logé en étant déplaçable en levée par rapport au chariot (12).

4. Dispositif selon l'une quelconque des revendications 1 à 3, **caractérisé en ce que** le porte-pièce (12) est susceptible d'être mis en prise contre le plafond (5), conjointement avec la base (3) de la chambre de nettoyage (3, 5).

5. Dispositif selon l'une quelconque des revendications 2 à 4, **caractérisé en ce que** la base (3) et le plafond (5) sont susceptibles d'être assemblés l'un avec l'autre, au moins par complémentarité de force.

6. Dispositif selon l'une quelconque des revendications 2 à 5, **caractérisé en ce que** le plafond (5) est équipé d'un propre entraînement.

7. Dispositif selon l'une quelconque des revendications 2 à 6, **caractérisé en ce que** le plafond (5) est conçu au moins sous la forme d'une partie intégrante d'un brin guidé autour de galets de transport (14).

8. Dispositif selon la revendication 7, **caractérisé en ce qu'**au moins un galet de transport (14) est équipé de l'entraînement.

9. Dispositif selon la revendication 7 ou 8, **caractérisé en ce que** le brin est conçu sous la forme d'une bande de convoyage (5) guidée autour des galets de transport (14).

10. Dispositif selon la revendication 9, **caractérisé en ce que** la bande de convoyage (5) est configurée pour générer vers des orifices (8) associés, au moyen du système de dépression (11) enserré une dépression dans la chambre de nettoyage (3, 5).

11. Procédé, destiné à nettoyer une pièce à usiner (1, 1'), à l'aide d'au moins une chambre de nettoyage (3, 5), pour réceptionner la pièce à usiner (1, 1') placée sur un porte-pièce (2), le porte-pièce (2) étant logé en étant déplaçable sur un chariot (12) et étant déplacé, conjointement avec le chariot (12) par un entraînement linéaire (10) le long d'une direction de convoyage (F),
suite à quoi, un système de dépression (11) générant un courant d'air (6) de nettoyage à travers des orifices (8, 9) de la chambre de nettoyage (3, 5) et suite à quoi, une unité de déplacement (7) sollicitant la chambre de nettoyage (3, 5) et le porte-pièce (2) et/ou la pièce à usiner (1, 1'), pour générer un déplacement relatif de la pièce à usiner (1, 1') par rapport aux orifices (8, 9),
**caractérisé en ce**
**qu'**à l'aide du déplacement linéaire (10), un entraînement synchrone de la chambre de nettoyage (3, 5) et du porte-pièce (2) et ainsi de la pièce à usiner (1, 1') est réalisé,
l'unité de déplacement (7) étant conçue sous la forme d'un galet (7) sollicitant la pièce à usiner (1, 1'),
lors du transport du chariot (12) concerné et du porte-pièce (2) ainsi porté, le galet (7) en question arrivant en contact, le long de la direction de convoyage (F) avec un guidage (15) latéral stationnaire et étant ainsi amené en rotation.
